(19) Europäisches Patentamt / European Patent Office / Office européen des brevets

(11) EP 3 663 103 A1

(12) **EUROPEAN PATENT APPLICATION**
published in accordance with Art. 153(4) EPC

(43) Date of publication:
**10.06.2020 Bulletin 2020/24**

(21) Application number: **18848888.6**

(22) Date of filing: **25.07.2018**

(51) Int Cl.:
***B60C 11/00*** *(2006.01)*

(86) International application number:
**PCT/JP2018/027793**

(87) International publication number:
**WO 2019/039175 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2017 JP 2017159644**

(71) Applicant: **Sumitomo Rubber Industries, Ltd.**
**Kobe-shi, Hyogo 651-0072 (JP)**

(72) Inventors:
- **MATSUI, Ryoji**
**Kobe-shi,**
**Hyogo-ken, 651-0072 (JP)**
- **MIYAZAKI, Tatsuya**
**Kobe-shi,**
**Hyogo-ken, 651-0072 (JP)**
- **HASHIMOTO, Naoya**
**Kyoto-shi,**
**Kyoto 605-0995 (JP)**
- **NISHIMOTO, Tsuyoshi**
**Kyoto-shi,**
**Kyoto 605-0995 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) The present invention provides a pneumatic tire that can exhibit sufficient wet grip performance on roads in different areas. The present invention relates to a pneumatic tire including a tread, the tread showing a loss tangent (tan δ) versus temperature curve whose peak position is at -20.0°C to 0.0°C and whose tan δ at the peak position is 0.80 or higher, the curve being obtained by plotting tan δ as a function of measurement temperature, the curve having a tan δ at an intersection of a tangent line to the curve at a temperature lower by 20°C than the peak position temperature and a tangent line to the curve at a temperature higher by 20°C than the peak position temperature that satisfies the following relationship (1):

$$(\tan\delta \text{ at peak position} - 0.05) \leq (\tan\delta \text{ at intersection}) \leq (\tan\delta \text{ at peak position} + 0.05) \quad (1).$$

EP 3 663 103 A1

## Description

TECHNICAL FIELD

The present invention relates to a pneumatic tire.

BACKGROUND ART

With the increasing demand for safer automobiles in recent years, tire treads have been required to have improved wet grip performance.

For example, Patent Literature 1 proposes a method of improving wet grip performance by using a rubber composition that contains an oil extended polybutadiene rubber synthesized with a rare earth catalyst, a specific styrene-butadiene rubber, an inorganic filler, and other ingredients.

CITATION LIST

PATENT LITERATURE

Patent Literature 1: JP 2015-232114 A

SUMMARY OF INVENTION

TECHNICAL PROBLEM

Meanwhile, the area where the same type of tire is used is expanding with globalization. For example, it has become necessary to simultaneously increase wet grip performance on roads in both Europe and South Africa.

The present invention aims to solve the problem and provide a pneumatic tire that can exhibit sufficient wet grip performance on roads in different areas.

SOLUTION TO PROBLEM

The present invention relates to a pneumatic tire, including a tread,
the tread showing a loss tangent (tan δ) versus temperature curve whose peak position is at -20.0°C to 0.0°C and whose tan δ at the peak position is 0.80 or higher, the curve being obtained by plotting tan δ as a function of measurement temperature,
the curve having a tan δ at an intersection of a tangent line to the curve at a temperature lower by 20°C than the peak position temperature and a tangent line to the curve at a temperature higher by 20°C than the peak position temperature that satisfies the following relationship (1):

(tan δ at peak position - 0.05) ≤ (tan δ at intersection) ≤ (tan δ at peak position + 0.05)   (1).

Preferably, the curve has a tan δ at a temperature lower by 20°C than the peak position temperature and a tan δ at a temperature higher by 20°C than the peak position temperature that satisfy the following relationships (2) and (3), respectively:

(tan δ at temperature lower by 20°C than peak position temperature) ≥ (tan δ at peak position × 0.20)   (2); a

and

(tan δ at temperature higher by 20°C than peak position temperature) ≥ (tan δ at peak position × 0.20)   (3).

Preferably, the curve has a tan δ at a temperature lower by 20°C than the peak position temperature and a tan

δ at a temperature higher by 20°C than the peak position temperature that satisfy the following relationship (4):

$$|(\tan\delta \text{ at temperature lower by 20°C than peak position temperature}) - (\tan\delta \text{ at temperature higher by 20°C than peak position temperature})| \leq 0.30 \quad (4).$$

Preferably, the peak has a half-width of 30 or less as defined by the following equation (5):

$$\text{half-width} = (\text{temperature on high temperature side at which } \tan\delta \text{ is one half of } \tan\delta \text{ at peak position}) - (\text{temperature on low temperature side at which } \tan\delta \text{ is one half of } \tan\delta \text{ at peak position}).$$

ADVANTAGEOUS EFFECTS OF INVENTION

The pneumatic tire of the present invention includes a tread which shows a loss tangent (tan δ) versus temperature curve whose peak position is at -20.0°C to 0.0°C and whose tan δ at the peak position is 0.80 or higher, and in which the curve is obtained by plotting tan δ as a function of measurement temperature, and the curve has a tan δ at an intersection of a tangent line to the curve at a temperature lower by 20°C than the peak position temperature and a tangent line to the curve at a temperature higher by 20°C than the peak position temperature that satisfies relationship (1). Such a pneumatic tire can exhibit sufficient wet grip performance on roads in different areas.

BRIEF DESCRIPTION OF DRAWINGS

Fig. 1 illustrates an exemplary tan δ versus temperature curve of a tread rubber.

DESCRIPTION OF EMBODIMENTS

The pneumatic tire of the present invention includes a tread rubber that shows a tan δ versus temperature curve whose peak position is at -20.0°C to 0.0°C and whose tan δ at the peak position is 0.80 or higher. Further, the curve has a tan δ at an intersection of a tangent line to the curve at a temperature lower by 20°C than the peak position temperature and a tangent line to the curve at a temperature higher by 20°C than the peak position temperature that satisfies the following relationship (1):

$$(\tan\delta \text{ at peak position} - 0.05) \leq (\tan\delta \text{ at intersection}) \leq (\tan\delta \text{ at peak position} + 0.05) \quad (1).$$

Such a pneumatic tire can exhibit sufficient wet grip performance on roads in different areas.

The pneumatic tire of the present invention can exhibit sufficient wet grip performance on roads in different areas. This is believed to be due to the following effect mechanism.

Conventionally, attention has been focused mainly on the magnitude of tan δ at the peak position in order to improve wet grip performance. However, the present inventors have found as a result of numerous experiments that to adapt to roads in different areas, it is insufficient to focus only on the magnitude of tan δ at the peak position. The studies of the present inventors have demonstrated that, in fact, a higher tan δ at the peak position leads to increased wet grip performance, but if the peak shape is too sharp, it is not possible to adapt to roads in different areas. The present inventors have found through trial and error that wet grip performance can be achieved on roads in both Germany and the Republic of South Africa when the peak position temperature is within a predetermined range, and the tan δ at the peak position is a predetermined value or higher, and further tan δ is high over a range of ±20°C of the peak position temperature. Then, it has been found that sufficient wet grip performance can be exhibited on roads in different areas by using, as an index, the difference between the intersection of tangent lines to the temperature dependent curve at ±20°C of the peak position temperature (tan δ at the intersection of the two tangent lines) and the peak top (tan δ at the

peak position). Specifically, it has been found that sufficient wet grip performance can be exhibited on roads in different areas when the difference between the tan δ at the intersection and the tan δ at the peak position is small. As described above, the present invention was made based on the finding (technical idea) that sufficient wet grip performance can be exhibited on roads in different areas when the peak position temperature is within a predetermined range, and the tan δ at the peak position is a predetermined value or higher, and further the difference between the tan δ at the intersection and the tan δ at the peak position is small. Thus, the present invention can provide sufficient wet grip performance on roads in different areas.

Next, how to draw tangent lines, and the like are described using Fig. 1.

Fig. 1 illustrates an exemplary tan δ versus temperature curve C1 of a tread rubber. A point "PP" denotes the peak top of the tan δ versus temperature curve C1; the temperature at the point "PP" corresponds to the peak position temperature "tP", and the tan δ at the point "PP" corresponds to the tan δ at the peak position; "t1" denotes a temperature lower by 20°C than the peak position temperature "tP"; and "t2" denotes a temperature higher by 20°C than the peak position temperature "tP". A tangent line to the tan δ versus temperature curve at the temperature "t1" lower by 20°C than the peak position temperature refers to a tangent line "L1" drawn at a point "P1" at the temperature "t1" on the tan δ versus temperature curve C1. Similarly, a tangent line to the tan δ versus temperature curve at the temperature "t2" higher by 20°C than the peak position temperature refers to a tangent line "L2" drawn at a point "P2" at the temperature "t2" on the tan δ versus temperature curve C1. An intersection of a tangent line to the tan δ versus temperature curve at a temperature lower by 20°C than the peak position temperature and a tangent line to the tan δ versus temperature curve at a temperature higher by 20°C than the peak position temperature is indicated by a point "PL" that is an intersection of the tangent line "L1" and the tangent line "L2". The tan δ at the intersection refers to the tan δ at the point "PL". Then, when the difference "d1" between the tan δ at the point "PP" (tan δ at the peak position) and the tan δ at the point "PL" (tan δ at the intersection) is as small as 0.05 or less, sufficient wet grip performance can be exhibited on roads in different areas.

Each of the tangent lines may be drawn by expressing the tan δ versus temperature curve of the tread rubber as a function, and calculating an equation of the tangent line using the function. Specifically, when the function expressing the tan δ versus temperature curve of the tread rubber is: $y = f(x)$, the tangent lines to the curve at the temperatures "t1" and "t2" are: $y = f'(t1)(x - t1) + f(t1)$; and $y = f'(t2)(x - t2) + f(t2)$, respectively.

The tan δ at the temperature "t1" lower by 20°C than the peak position temperature means the tan δ at the point "P1". The tan δ at the temperature "t2" higher by 20°C than the peak position temperature means the tan δ at the point "P2".

Herein, the loss tangent (tan δ) versus temperature curve of the (vulcanized) tread rubber obtained by plotting tan δ as a function of measurement temperature is a tan δ versus temperature curve measured on the (vulcanized) tread rubber using a viscoelastic spectrometer at a frequency of 10 Hz, an initial strain of 10%, an amplitude of ±0.25%, and a temperature rising rate of 2°C/min over a temperature range from -120°C to 70°C.

In the tan δ versus temperature curve of the tread in the present invention, the peak position temperature is -20.0°C to 0.0°C. With this feature, good wet grip performance can be obtained while satisfying the prerequisite for achieving sufficient wet grip performance on roads in different areas.

The lower limit of the peak position temperature is preferably -18°C, more preferably -16°C, still more preferably -12°C. The upper limit of the peak position temperature is preferably -5°C, more preferably -7°C, still more preferably -10°C.

In the tan δ versus temperature curve of the tread in the present invention, the tan δ at the peak position is 0.80 or higher. With this feature, good wet grip performance can be obtained while satisfying the prerequisite of achieving sufficient wet grip performance on roads in different areas.

A higher tan δ at the peak position is better. The lower limit of the tan δ at the peak position is preferably 0.85, more preferably 0.90, still more preferably 1.00. The upper limit is not limited.

In the tan δ versus temperature curve of the tread in the present invention, the tan δ at an intersection of a tangent line to the curve at a temperature lower by 20°C than the peak position temperature and a tangent line to the curve at a temperature higher by 20°C than the peak position temperature satisfies the relationship (1) shown below. Relationship (1) defines that the difference between the tan δ at the peak position and the tan δ at the intersection is 0.05 or less. When relationship (1) is satisfied, wet grip performance can be simultaneously achieved on roads in different areas.

A smaller difference between the tan δ at the peak position and the tan δ at the intersection is better. The upper limit of the difference is preferably 0.04, more preferably 0.02, still more preferably 0.01, particularly preferably 0.00 (i.e., no difference).

$$(\tan\delta \text{ at peak position} - 0.05) \le (\tan\delta \text{ at intersection}) \le (\tan\delta \text{ at peak position} + 0.05) \quad (1)$$

The tan δ versus temperature curve in the present invention may include a plurality of peak tops. In this case, it is sufficient to adjust the peak position temperature, the tan δ at the peak position, and the difference between the tan δ at the peak position and the tan δ at the intersection of at least one of the peaks to fall within the ranges indicated above.

Once the target values of the peak position temperature, the tan δ at the peak position, and the difference between the tan δ at the peak position and the tan δ at the intersection are determined, a person skilled in the art could easily prepare a tread rubber that satisfies the target values.

Specifically, a tread rubber having a peak position temperature, tan δ at the peak position, and difference between the tan δ at the peak position and the tan δ at the intersection falling within the above-indicated ranges may be prepared by combining various methods which can vary tan δ. Examples of such methods include: rubber component-based methods such as using a lot of different types of rubbers, or using a combination of rubbers having different microstructures, or using a combination of styrene-butadiene rubbers having different styrene contents, or combining a styrene-butadiene rubber containing a modifying group; filler-based methods such as adjusting the particle size or amount of silica or carbon black, or using a combination of fillers, or using a surface-treated filler, or using a combination of fillers having different aggregate properties; and other methods such as adjusting the type or amount of silane coupling agent, or adjusting the type or amount of resin (in particular, resin compatible with the rubber component), or using multiple resins, or using a chemical capable of improving processability of the rubber compound during kneading, or using a polymer component which is liquid at room temperature, or adjusting the type or amount of process oil.

Among these methods, it is preferred to use a rubber component including multiple rubbers, more preferably a combination of at least three, still more preferably at least four, particularly preferably at least five rubbers. The rubber component also preferably includes a combination of a styrene-butadiene rubber, an isoprene-based rubber, and a polybutadiene rubber. With the above-mentioned embodiments of the rubber component, the resulting tan δ versus temperature curve can be moderately broad, so that the peak position temperature, tan δ at the peak position, and difference between the tan δ at the peak position and the tan δ at the intersection can be adjusted within the ranges indicated above. Moreover, it is particularly preferred to incorporate a compound represented by the formula (1) described later. This can increase the absolute value of tan δ.

To adjust the peak position temperature within the temperature range indicated above, it is preferred to incorporate a styrene-butadiene rubber (preferably a solution-polymerized styrene-butadiene rubber) having a styrene content of 20% by mass or higher in an amount of 60% by mass or more based on 100% by mass of the rubber component. It is more preferred to incorporate multiple styrene-butadiene rubbers (preferably solution-polymerized styrene-butadiene rubbers) having a styrene content of 20% by mass or higher in a total amount of 60% by mass or more based on 100% by mass of the rubber component. Examples of other rubbers that may be used include diene rubbers as described later. Other methods may also be used such as using a resin (preferably resin compatible with the rubber component) or changing the type of plasticizer.

To adjust the tan δ at the peak position within the range indicated above, it is preferred to incorporate a styrene-butadiene rubber (preferably a solution-polymerized styrene-butadiene rubber) having a styrene content of 20% by mass or higher in an amount of 60% by mass or more based on 100% by mass of the rubber component. It is more preferred to incorporate multiple styrene-butadiene rubbers (preferably solution-polymerized styrene-butadiene rubbers) having a styrene content of 20% by mass or higher in a total amount of 60% by mass or more based on 100% by mass of the rubber component. Other methods may also be used such as: adjusting the amount or aggregate properties such as particle size of silica or carbon black; or using a combination of fillers; or using a resin (preferably resin compatible with the rubber component); or incorporating a compound represented by the formula (1) described later.

The difference between the tan δ at the peak position and the tan δ at the intersection may be adjusted within the range indicated above by methods similar to those for adjusting the tan δ at the peak position within the range indicated above.

In the tan δ versus temperature curve of the tread in the present invention, the tan δ at a temperature lower by 20°C than the peak position temperature and the tan δ at a temperature higher by 20°C than the peak position temperature preferably satisfy the relationships (2) and (3), respectively, shown below. With this feature, sufficient wet grip performance can be more suitably exhibited on roads in different areas.

A higher lower limit of relationship (2) or (3) is better, and it is preferably 0.30, more preferably 0.40, still more preferably 0.50, while the upper limit is not limited as long as relationship (1) is satisfied.

(tan δ at temperature lower by 20°C than peak position temperature) ≥ (tan δ at peak position × 0.20)   (2)

(tan δ at temperature higher by 20°C than peak position temperature) ≥ (tan δ at peak position × 0.20)   (3)

Relationships (2) and (3) may be satisfied by methods such as using a styrene-butadiene rubber or polybutadiene rubber having a high molecular weight, or using a combination of two or more styrene-butadiene rubbers, or using a combination of an isoprene-based rubber and a rubber compatible with the isoprene-based rubber, or incorporating a compound represented by the formula (1) described later, or using a resin (preferably resin compatible with the rubber component).

In the tan δ versus temperature curve of the tread in the present invention, the tan δ at a temperature lower by 20°C than the peak position temperature and the tan δ at a temperature higher by 20°C than the peak position temperature preferably satisfy the relationship (4) shown below. With this feature, sufficient wet grip performance can be more suitably exhibited on roads in different areas.

A lower upper limit of relationship (4) is better, and it is preferably 0.20, more preferably 0.10, still more preferably 0.05, particularly preferably 0.00.

|(tan δ at temperature lower by 20°C than peak position temperature) - (tan δ at temperature higher by 20°C than peak position temperature)| ≤ 0.30 (4)

Relationship (4) may be satisfied by methods similar to those for satisfying relationships (2) and (3).

In the tan δ versus temperature curve of the tread in the present invention, the peak preferably has a half-width of 30 or less as defined by the equation (5) shown below. With this feature, sufficient wet grip performance can be more suitably exhibited on roads in different areas.

The upper limit of the half-width is preferably 27, more preferably 25, still more preferably 23. The lower limit of the half-width is preferably 10, more preferably 12, still more preferably 14.

Equation (5): half-width = (temperature on high temperature side at which tan δ is one half of tan δ at peak position) - (temperature on low temperature side at which tan δ is one half of tan δ at peak position)

The half-width may be adjusted within the range indicated above by methods similar to those for satisfying relationships (2) and (3).

The tread can be produced by vulcanizing a tread rubber composition. A description of the tread rubber composition follows below.

Examples of rubbers that may be used in the rubber component in the present invention include diene rubbers such as isoprene-based rubbers, polybutadiene rubber (BR), styrene-butadiene rubber (SBR), acrylonitrile-butadiene rubber (NBR), chloroprene rubber (CR), butyl rubber (IIR), and styrene-isoprene-butadiene copolymer rubber (SIBR). These diene rubbers may be used alone or in combinations of two or more. In particular, to suitably adjust the peak position temperature, the tan δ at the peak position, and the difference between the tan δ at the peak position and the tan δ at the intersection to the desired values so that the effects of the present invention can be more suitably achieved, the rubber component preferably includes multiple rubbers, more preferably a combination of three or more rubbers, still more preferably a combination of four or more rubbers, particularly preferably a combination of five or more rubbers. The rubber component also preferably includes a combination of a styrene-butadiene rubber, an isoprene-based rubber, and a polybutadiene rubber.

Any SBR may be used, including emulsion-polymerized styrene-butadiene rubber (E-SBR) and solution-polymerized styrene-butadiene rubber (S-SBR).

The SBR preferably has a styrene content of 5% by mass or higher, more preferably 10% by mass or higher, still more preferably 15% by mass or higher. A styrene content of 5% by mass or higher tends to lead to better wet grip performance. The styrene content is preferably 45% by mass or lower, more preferably 40% by mass or lower, still more preferably 35% by mass or lower. A styrene content of 45% by mass or lower tends to result in less heat build-up and better fuel economy.

Herein, the styrene content is determined by $H^1$-NMR.

The SBR preferably has a vinyl content of 30% by mass or higher, more preferably 40% by mass or higher. A vinyl content of 30% by mass or higher tends to lead to better wet grip performance. The vinyl content is preferably 60% by mass or lower, more preferably 50% by mass or lower. A vinyl content of 60% by mass or lower tends to lead to

better abrasion resistance.

Herein, the vinyl content (1,2-butadiene unit content) can be determined by infrared absorption spectrometry.

To suitably adjust the peak position temperature, the tan δ at the peak position, and the difference between the tan δ at the peak position and the tan δ at the intersection to the desired values so that the effects of the present invention can be more suitably achieved, it is preferred to incorporate multiple types of SBR having different styrene contents, more preferably three or more types of SBR having different styrene contents.

When three types of SBR are used, they may be, for example, SBR A having a styrene content of 10 to 25% by mass, preferably 10 to 15% by mass, SBR B having a styrene content of 20 to 40% by mass, preferably 20 to 30% by mass, and SBR C having a styrene content of 25 to 50% by mass, preferably 35 to 50% by mass.

The SBR may be a non-modified or modified SBR, but is preferably a modified SBR to better achieve the effects of the present invention.

The modified SBR may be any SBR having a functional group interactive with filler such as silica or carbon black. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group, and at least one chain end is modified with the modifier); or a chain end-modified SBR that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, carboxyl, amide, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred to more suitably achieve the effects of the present invention.

The SBR may be a commercial product of, for example, Sumitomo Chemical Co., Ltd., JSR Corporation, Asahi Kasei Corporation, or Zeon Corporation.

The amount of the SBR (total amount in the case where multiple types of SBR are used), if present, based on 100% by mass of the rubber component is preferably 30% by mass or more, more preferably 50% by mass or more, still more preferably 60% by mass or more, particularly preferably 70% by mass or more. When the amount is 30% by mass or more, better wet grip performance tends to be obtained. The amount of the SBR is also preferably 90% by mass or less, more preferably 85% by mass or less. When the amount is 90% by mass or less, better fuel economy and abrasion resistance tend to be obtained.

Any BR may be used, and examples include high-cis BR and BR containing syndiotactic polybutadiene crystals.

The BR may be a non-modified or modified BR, but is preferably a modified BR to better achieve the effects of the present invention.

Examples of the modified BR include those into which functional groups as listed for the modified SBR have been introduced.

The BR may be a commercial product of, for example, Ube Industries, Ltd., JSR Corporation, Asahi Kasei Corporation, or Zeon Corporation.

The amount of the BR (total amount in the case where multiple types of BR are used), if present, based on 100% by mass of the rubber component is preferably 5% by mass or more, preferably 10% by mass or more. When the amount is 5% by mass or more, better fuel economy and abrasion resistance tend to be obtained. The amount of the BR is also preferably 40% by mass or less, more preferably 25% by mass or less. When the amount is 40% by mass or less, better wet grip performance tends to be obtained.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more.

The amount of the isoprene-based rubber (total amount in the case where multiple isoprene-based rubbers are used), if present, based on 100% by mass of the rubber component is preferably 5% by mass or more, more preferably 10% by mass or more. When the amount is 5% by mass or more, better fuel economy and abrasion resistance tend to be obtained. The amount of the isoprene-based rubber is also preferably 30% by mass or less, more preferably 20% by mass or less. When the amount is 30% by mass or less, better wet grip performance tends to be obtained.

The tread rubber composition preferably contains carbon black.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area ($N_2SA$) of 5 $m^2/g$ or more, more preferably 50 $m^2/g$ or more, particularly preferably 100 $m^2/g$ or more. When the $N_2SA$ is 5 $m^2/g$ or more, reinforcing properties tend to be improved, resulting in better wet grip performance. The $N_2SA$ is also preferably 200 $m^2/g$ or less, more preferably 150 $m^2/g$ or less, still more preferably 130 $m^2/g$ or less. Carbon black having a $N_2SA$ of 200 $m^2/g$ or less tends to disperse better, resulting in better abrasion resistance and fuel economy.

The nitrogen adsorption specific surface area of the carbon black is determined in accordance with JIS K6217-2:2001.

The carbon black preferably has a dibutyl phthalate oil absorption (DBP) of 5 ml/100 g or more, more preferably 50 ml/100 g or more, still more preferably 100 ml/100 g or more. When the DBP is 5 ml/100 g or more, reinforcing properties tend to be improved, resulting in better wet grip performance. The DBP is also preferably 300 ml/100 g or less, more preferably 200 ml/100 g or less, still more preferably 130 ml/100 g or less. When the DBP is 300 ml/100 g or less, better abrasion resistance tends to be obtained.

The DBP of the carbon black is determined in accordance with JIS K6217-4:2001.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black, if present, per 100 parts by mass of the rubber component is 1 part by mass or more, preferably 5 parts by mass or more. When the amount is 1 part by mass or more, sufficient reinforcing properties tend to be obtained, resulting in better wet grip performance. Moreover, the amount is 30 parts by mass or less, preferably 15 parts by mass or less. When the amount is 30 parts by mass or less, better fuel economy tends to be obtained.

The tread rubber composition preferably contains silica. Examples of the silica include dry silica (anhydrous silicic acid) and wet silica (hydrous silicic acid). Wet silica is preferred because it contains a large number of silanol groups.

The silica may be a commercial product of, for example, Degussa, Rhodia, Tosoh Silica Corporation, Solvay Japan, or Tokuyama Corporation.

The silica preferably has a nitrogen adsorption specific surface area ($N_2SA$) of 50 $m^2/g$ or more, more preferably 100 $m^2/g$ or more. When the $N_2SA$ is 50 $m^2/g$ or more, better wet grip performance tends to be obtained. The $N_2SA$ of the silica is also preferably 300 $m^2/g$ or less, more preferably 250 $m^2/g$ or less, still more preferably 200 $m^2/g$ or less. When the $N_2SA$ is 300 $m^2/g$ or less, better fuel economy tends to be obtained.

The nitrogen adsorption specific surface area of the silica is measured by the BET method in accordance with ASTM D3037-81.

To suitably adjust the peak position temperature, the tan $\delta$ at the peak position, and the difference between the tan $\delta$ at the peak position and the tan $\delta$ at the intersection to the desired values so that the effects of the present invention can be more suitably achieved, it is preferred to incorporate two types of silica (silica (1) and silica (2)) having different nitrogen adsorption specific surface areas.

The silica (1) preferably has a $N_2SA$ of 130 $m^2/g$ or less, more preferably 125 $m^2/g$ or less, still more preferably 120 $m^2/g$ or less. When the silica (1) has a $N_2SA$ of 130 $m^2/g$ or less, the effect caused by combination with the silica (2) tends to be high. The $N_2SA$ of the silica (1) is also preferably 20 $m^2/g$ or more, more preferably 50 $m^2/g$ or more, still more preferably 80 $m^2/g$ or more. When the silica (1) has a $N_2SA$ of 20 $m^2/g$ or more, better wet grip performance tends to be obtained.

Examples of silica having a nitrogen adsorption specific surface area ($N_2SA$) of 130 $m^2/g$ or less include ULTRASIL 360 ($N_2SA$: 50 $m^2/g$) available from Degussa, ZEOSIL 115GR ($N_2SA$: 115 $m^2/g$) available from Rhodia, and ZEOSIL 1115MP ($N_2SA$: 115 $m^2/g$) available from Rhodia.

The silica (2) has a $N_2SA$ of 150 $m^2/g$ or more, preferably 160 $m^2/g$ or more, more preferably 170 $m^2/g$ or more. When the silica (2) has a $N_2SA$ of 150 $m^2/g$ or more, the effect caused by combination with the silica (1) tends to be high. The $N_2SA$ of the silica (2) is also preferably 300 $m^2/g$ or less, more preferably 240 $m^2/g$ or less, still more preferably 200 $m^2/g$ or less. When the silica (2) has a $N_2SA$ of 300 $m^2/g$ or less, good fuel economy tends to be obtained.

Examples of silica having a nitrogen adsorption specific surface area ($N_2SA$) of 150 $m^2/g$ or more include ULTRASIL VN3 ($N_2SA$: 175 $m^2/g$) available from Degussa, ZEOSIL 1165MP ($N_2SA$: 160 $m^2/g$) available from Rhodia, and ZEOSIL 1205MP ($N_2SA$: 200 $m^2/g$) available from Rhodia.

The amount of the silica (total amount in the case where multiple types of silica are used), if present, per 100 parts by mass of the rubber component is preferably 20 parts by mass or more, more preferably 40 parts by mass or more. When the amount is 20 parts by mass or more, better wet grip performance tends to be obtained. The amount is preferably 150 parts by mass or less, more preferably 100 parts by mass or less, still more preferably 70 parts by mass or less. When the amount is 150 parts by mass or less, the balance between processability and fuel economy can be more improved.

The tread rubber composition preferably contains a silane coupling agent together with silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the effects of the present invention, sulfide and/or mercapto silane coupling agents are preferred among these, with mercapto silane coupling agents being more preferred.

The silane coupling agent is preferably a silane coupling agent represented by the formula (2) below. This can suitably adjust the peak position temperature, the tan δ at the peak position, and the difference between the tan δ at the peak position and the tan δ at the intersection to the desired values so that the effects of the present invention can be more suitably achieved.

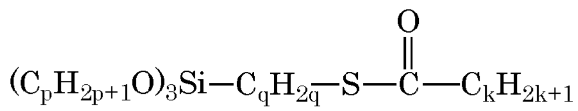 (2)

In the formula, p is an integer of 1 to 3, q is an integer of 1 to 5, and k is an integer of 5 to 12.

In formula (2), p is an integer of 1 to 3, preferably of 2. The silane coupling agent in which p is 3 or less tends to accelerate the coupling reaction.

The q is an integer of 1 to 5, preferably of 2 to 4, more preferably of 3. The silane coupling agent in which q is 1 to 5 tends to be easy to synthesize.

The k is an integer of 5 to 12, preferably of 5 to 10, more preferably of 6 to 8, still more preferably of 7.

Examples of the silane coupling agent of formula (2) include 3-octanoylthio-1-propyltriethoxysilane.

The silane coupling agent may be a commercial product of, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of the silica is preferably 3 parts by mass or more, more preferably 5 parts by mass or more. When the amount is 3 parts by mass or more, the added silane coupling agent tends to exert its effect. The amount is also preferably 20 parts by mass or less, more preferably 15 parts by mass or less. When the amount is 20 parts by mass or less, an effect commensurate with the added amount tends to be produced, and good processability during kneading tends to be obtained.

The tread rubber composition preferably contains a compound represented by the formula (1) below. This can suitably adjust the peak position temperature, the tan δ at the peak position, and the difference between the tan δ at the peak position and the tan δ at the intersection to the desired values so that the effects of the present invention can be more suitably achieved.

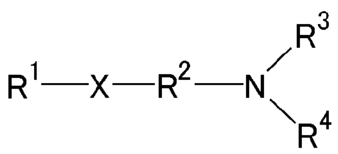 (1)

In formula (1), X represents -CONH- or -COO-; $R^1$ represents a C7-C23 alkyl group or a C7-C23 alkenyl group; $R^2$ represents a C1-C3 alkylene group; and $R^3$ and $R^4$ each independently represent a hydrogen atom, a C1-C3 alkyl group, or a C1-C3 hydroxyalkyl group, and at least one of them represents the hydroxyalkyl group.

The reason why the incorporation of the compound of formula (1) can suitably adjust the peak position temperature, the tan δ at the peak position, and the difference between the tan δ at the peak position and the tan δ at the intersection to the desired values is not clear but can be explained as follows.

The compound of formula (1) has moderate polarity at two parts thereof, i.e., the hydroxy group of $R^3$ and/or $R^4$ located at the molecular end, and the CONH or COO group as X located around the middle of the molecule, and thus it can moderately adsorb to (or interact with) the surface of white filler such as silica (in particular, the hydroxy group

on the surface of white filler). Then, the surface of the white filler is covered with and hydrophobized by the compound, which suppresses aggregation of the white filler molecules and also reduces the viscosity of the composition. Hence, it is possible to efficiently improve dispersion of the white filler in the rubber compound. Consequently, the peak position temperature, the tan δ at the peak position, and the difference between the tan δ at the peak position and the tan δ at the intersection can be suitably adjusted to the desired values.

The reason can also be explained as follows. The compound of formula (1) is characterized by having an amino group between the -CONH- or -COO- group and the alkanol group, as compared to fatty acid monoethanolamides and fatty acid diethanolamides conventionally used as agents for improving dispersion of white filler. The compound, which contains the amino and hydroxy groups in the molecular chain, shows improved adsorption to the surface of white filler (in particular, the hydroxy group on the surface of white filler) and is highly effective in reducing the viscosity of the composition, and thus can further improve dispersion of the white filler in the rubber compound. Furthermore, since the compound is highly adsorptive to silica due to the presence of the amino and hydroxy groups in the molecular chain, it can synergistically improve the interaction of silica with silane coupling agents or the modifying groups of modified polymers and dispersion of the silica. Consequently, the peak position temperature, the tan δ at the peak position, and the difference between the tan δ at the peak position and the tan δ at the intersection can be suitably adjusted to the desired values.

In formula (1), from the standpoint of increasing the polarity (electron withdrawing ability) of the middle part of the molecule and for easy production, X represents - CONH- or -COO-. In particular, X is preferably -CONH- to more suitably achieve the effects of the present invention.

From the standpoints of adsorption to white filler and the hydrophobizing ability of the compound of formula (1) itself, $R^1$ in formula (1) is a C7-C23 alkyl group or a C7-C23 alkenyl group. The alkyl or alkenyl group may be linear, branched, or cyclic, preferably linear. Examples include alkyl groups such as octyl, nonyl, isononyl, decyl, undecyl, dodecyl, tridecyl, isotridecyl, tetradecyl, hexadecyl, heptadecyl, octadecyl, nonadecyl, heneicosyl, and tricosyl groups; and alkenyl groups such as octenyl, nonenyl, decenyl, and heptadecenyl groups. Moreover, examples of preferred raw materials of the compound include fatty acids such as lauric acid, tridecylic acid, myristic acid, palmitic acid, stearic acid, behenic acid, oleic acid, coconut oil fatty acids, palm kernel oil fatty acids, palm oil fatty acids, hydrogenated palm oil fatty acids, beef tallow fatty acids, and hydrogenated beef tallow fatty acids, and methyl esters of the foregoing fatty acids; and fats and oils such as coconut oil, palm kernel oil, palm oil, hydrogenated palm oil, beef tallow, and hydrogenated beef tallow.

If the carbon number of $R^1$ in formula (1) is more than 23, the density of polar groups such as amino and COO groups tends to decrease, so that the compound tends to have lower polarity and thus lower adsorbability to the surface of white filler. Also, if the carbon number of $R^1$ is 6 or less, the adsorbability tends to be too high, thereby inhibiting bonding between the silane coupling agent and white filler (in particular, silica).

To more suitably achieve the effects of the present invention, the carbon number of the alkyl or alkenyl group as $R^1$ is preferably 9 to 21, more preferably 11 to 19, still more preferably 15 to 19.

To more suitably achieve the effects of the present invention, $R^1$ is preferably an alkyl group.

From the standpoint of providing moderately hydrophobic/hydrophilic amphoteric surfactant properties to the compound of formula (1), $R^2$ in formula (1) is a C1-C3 alkylene group. The alkylene group may be linear or branched, preferably linear.

Examples of the C1-C3 alkylene group include methylene, ethylene, and propylene groups.

If the carbon number of $R^2$ in formula (1) is more than 3, moderately hydrophobic/hydrophilic amphoteric surfactant properties tend not to be provided to the compound of formula (1), resulting in lower adsorbability to the surface of white filler.

From the standpoint of adsorption to white filler of the end portion of the compound of formula (1), $R^3$ and $R^4$ in formula (1) are each independently a hydrogen atom, a C1-C3 alkyl group, or a C1-C3 hydroxyalkyl group, and at least one of them is the hydroxyalkyl group.

The C1-C3 alkyl group may be linear, branched, or cyclic, preferably linear. Examples of the C1-C3 alkyl group include methyl, ethyl, and propyl groups.

If the carbon number of the alkyl group is more than 3, the density of polar groups such as amino and hydroxy groups tends to decrease, so that the compound tends to have lower polarity and thus lower adsorbability to the surface of white filler.

The C1-C3 hydroxyalkyl group may be linear, branched, or cyclic, preferably linear. Examples of the alkyl group (i.e., C1-C3 alkyl group) of the C1-C3 hydroxyalkyl group include methyl, ethyl, and propyl groups.

If the carbon number of the hydroxyalkyl group is more than 3, the density of polar groups such as amino and hydroxy groups tends to decrease, so that the compound tends to have lower polarity and thus lower adsorbability to the surface of white filler.

To more suitably achieve the effects of the present invention, it is preferred that one of $R^3$ and $R^4$ groups is a hydrogen atom and the other is a hydroxyalkyl group. This is believed to be because, like the terminal hydroxyl group,

the amino group in the molecular chain can easily adsorb to the surface of white filler (in particular, the hydroxy group on the surface of white filler), which facilitates neutralization of the acidity caused by the surface of white filler.

Specific examples of the compound of formula (1) include fatty acid amide ethylaminoethanols such as lauric acid amide ethylaminoethanol and stearic acid amide ethylaminoethanol; fatty acid ester ethylaminoethanols such as lauric acid ester ethylaminoethanol and stearic acid ester ethylaminoethanol; stearic acid amide (N-methyl)ethylaminoethanol, stearic acid amide (N-ethanol)ethylaminoethanol, lauric acid amide methylaminoethanol, stearic acid amide methylaminoethanol, lauric acid amide propylaminoethanol, stearic acid amide propylaminoethanol, lauric acid amide ethylaminomethanol, stearic acid amide ethylaminomethanol, lauric acid amide ethylaminopropanol, stearic acid amide ethylaminopropanol, stearic acid ester (N-methyl)ethylaminoethanol, stearic acid ester (N-ethanol)ethylaminoethanol, lauric acid ester methylaminoethanol, stearic acid ester methylaminoethanol, lauric acid ester propylaminoethanol, stearic acid ester propylaminoethanol, lauric acid ester ethylaminomethanol, stearic acid ester ethylaminomethanol, lauric acid ester ethylaminopropanol, and stearic acid ester ethylaminopropanol. These may be used alone or in combinations of two or more. To more suitably achieve the effects of the present invention, fatty acid amide ethylaminoethanols are preferred among these, with lauric acid amide ethylaminoethanol or stearic acid amide ethylaminoethanol being more preferred, with stearic acid amide ethylaminoethanol being still more preferred. This is believed to be because, like the terminal hydroxyl group, the amino group in the molecular chain can easily adsorb to the surface of white filler (in particular, the hydroxy group on the surface of white filler), which facilitates neutralization of the acidity caused by the surface of white filler.

The compound of formula (1) can be synthesized by known methods. For example, a fatty acid amide ethylaminoethanol may be prepared by mixing a fatty acid or fatty acid methyl ester with 2-(2-aminoethylamino)ethanol, heating the mixture at 120°C to 180°C, and evaporating the formed water or methanol.

The amount of the compound of formula (1), if present, per 100 parts by mass of the rubber component is preferably 0.5 parts by mass or more, more preferably 1 part by mass or more, still more preferably 2 parts by mass or more, because the compound can moderately interact with white filler without inhibiting the reaction of the white filler (particularly silica) and a silane coupling agent, if present, i.e., without excessively lubricating the surface of the white filler, and thus can produce the viscosity-reducing effect and the effect of improving dispersion of white filler. To improve fuel economy, wet grip performance, and abrasion resistance without excessively lubricating the surface of white filler, the amount of the compound is also preferably 10 parts by mass or less, more preferably 8 parts by mass or less, still more preferably 6 parts by mass or less.

The tread rubber composition preferably contains a softener component including an aromatic resin. This can suitably adjust the peak position temperature, the tan $\delta$ at the peak position, and the difference between the tan $\delta$ at the peak position and the tan $\delta$ at the intersection to the desired values so that the effects of the present invention can be more suitably achieved. In the present invention, the term "softener component" refers to a component that is soluble in acetone. Specific examples include, in addition to aromatic resins, oils such as process oils and plant fats and oils, liquid diene polymers, and polyterpene resins.

Aromatic resins refer to polymers containing an aromatic compound as a constituent component. The aromatic compound may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone and indene.

Examples of such aromatic resins include $\alpha$-methylstyrene-based resins, coumarone-indene resins, aromatic modified terpene resins, and terpene aromatic resins. To better achieve the effects of the present invention, $\alpha$-methylstyrene-based resins or aromatic modified terpene resins are preferred among these, with $\alpha$-methylstyrene-based resins being more preferred.

Examples of the $\alpha$-methylstyrene-based resins include $\alpha$-methylstyrene homopolymers and copolymers of $\alpha$-methylstyrene and styrene. Coumarone-indene resins refer to resins containing coumarone and indene as monomer components forming the skeleton (backbone) of the resins. Examples of monomer components which may be contained in the skeleton in addition to coumarone and indene include styrene, methylindene, and vinyltoluene. Examples of the aromatic modified terpene resins include resins obtained by modification of terpene resins with aromatic compounds (preferably styrene derivatives, more preferably styrene), and resins produced by hydrogenation of the foregoing resins. Examples of the terpene aromatic resins include resins produced by copolymerization of terpene compounds and aromatic compounds (preferably styrene derivatives or phenol compounds, more preferably styrene), and resins produced by hydrogenation of the foregoing resins.

Examples of the $\alpha$-methylstyrene-based resins include SYLVARES SA85 (SYLVATRAX 4401), SA100, SA120, and SA140 (Arizona Chemical), and FTR0100, 2120, 2140, and 7100 (Mitsui Chemicals, Inc.). Examples of the coumarone-indene resins include G-90 and V-120 (Nitto Chemical Co., Ltd.), and NOVARES C10, C30, C70, C80, C90, C100, C120, C140, and C160 (Rutgers Chemicals). Examples of the aromatic modified terpene resins include YS resin

TO85, TO105, TO115 and TO125, and Clearon M125, M115, M105, K100, and K4100 (Yasuhara Chemical Co., Ltd.). Examples of the terpene aromatic resins include YS Polyster U130, U115, T160, T145, T130, T115, T100, T80, T30, S145, G150, G125, N125, K125, TH130, and UH115 (Yasuhara Chemical Co., Ltd.), Tamanol 803L and 901 (Arakawa Chemical Industries, Ltd.), and SYLVARES TP95, TP96, TP300, TP2040, TP2019, TP2040HM, TP7042, TP105, and TP115 (Arizona Chemical).

The aromatic resin preferably has a softening point of 30°C or higher, more preferably 60°C or higher. The softening point is also preferably 160°C or lower, more preferably 130°C or lower. When the softening point is within the numerical range indicated above, the effects of the present invention tend to be better achieved.

In the present invention, the softening point is determined as set forth in JIS K 6220-1:2001 using a ring and ball softening point measuring apparatus and defined as the temperature at which the ball drops down.

The amount of the aromatic resin, if present, per 100 parts by mass of the rubber component is preferably 2 parts by mass of more, but is 10 parts by mass or less, preferably 7 parts by mass or less. When the amount is within the numerical range indicated above, the effects of the present invention tend to be better achieved.

Examples of the oils include process oils, plant fats and oils, and mixtures thereof. Examples of the process oils include paraffinic process oils, aromatic process oils, and naphthenic process oils. Examples of the plant fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. To better achieve the effects of the present invention, process oils are preferred among these.

The liquid diene polymers may be any diene polymer having a weight average molecular weight of 50,000 or less. Examples include styrene-butadiene copolymers (rubbers), polybutadiene polymers (rubbers), polyisoprene polymers (rubbers), and acrylonitrile-butadiene copolymers (rubbers). Preferred among these are liquid styrene-butadiene copolymers (liquid SBR) or liquid polybutadiene polymers (liquid BR).

The weight average molecular weight (Mw) of the liquid diene polymers is preferably 1,000 or more, more preferably 1,500 or more. When the Mw is less than 1,000, abrasion resistance tends to decrease. The Mw is also preferably 50,000 or less, more preferably 20,000 or less, still more preferably 15,000 or less. When the Mw is more than 50,000, snow and ice performance, particularly initial snow and ice performance tends to decrease. In addition, due to the reduced difference from the molecular weight of the rubber component, the softener effect tends not to be easily produced.

Examples of the polyterpene resins include terpene resins such as α-pinene resin, β-pinene resin, limonene resin, dipentene resin, and β-pinene-limonene resin, and hydrogenated terpene resins produced by hydrogenation of the foregoing terpene resins.

The amount of the softener component, if present, per 100 parts by mass of the rubber component is preferably 3 parts by mass or more, but is preferably 20 parts by mass or less, more preferably 10 parts by mass or less. When the amount is within the numerical range indicated above, the effects of the present invention tend to be better achieved.

As the softener component, commercial products of Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., Taoka Chemical Co., Ltd., Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc. may be used.

The tread rubber composition preferably contains zinc oxide.

Conventionally known zinc oxide may be used, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide, if present, per 100 parts by mass of the rubber component is preferably 0.5 parts by mass or more, more preferably 1 part by mass or more, but is preferably 10 parts by mass or less, more preferably 5 parts by mass or less. When the amount is within the numerical range indicated above, the effects of the present invention tend to be better achieved.

The tread rubber composition preferably contains stearic acid.

Conventionally known stearic acid may be used. Examples include commercial products of NOF Corporation, NOF Corporation, Kao Corporation, FUJIFILM Wako Pure Chemical Corporation, and Chiba Fatty Acid Co., Ltd.

The amount of the stearic acid, if present, per 100 parts by mass of the rubber component is preferably 0.5 parts by mass or more, more preferably 1 part by mass or more, but is preferably 10 parts by mass or less, more preferably 5 parts by mass or less. When the amount is within the numerical range indicated above, the effects of the present invention tend to be well achieved.

The tread rubber composition preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)propionate]methane. These may be used alone or in combinations of two or more. Among these, p-phenylenediamine antioxidants are preferred, with N-(1,3-dimethylbutyl)-N'-phenyl-p-phenylenediamine being more preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 0.5 parts by mass or more, more preferably 1 part by mass or more, but is preferably 10 parts by mass or less, more preferably 5 parts by mass or less. When the amount is within the numerical range indicated above, the effects of the present invention tend to be well achieved.

The tread rubber composition preferably contains a wax.

Any wax may be used. Examples include petroleum waxes such as paraffin waxes and microcrystalline waxes; naturally-occurring waxes such as plant waxes and animal waxes; and synthetic waxes such as polymers of ethylene, propylene, or other monomers. These may be used alone or in combinations of two or more. To better achieve the effects of the present invention, petroleum waxes are preferred among these, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The amount of the wax, if present, per 100 parts by mass of the rubber component is preferably 1 part by mass or more, more preferably 2 parts by mass or more, but is preferably 20 parts by mass or less, more preferably 10 parts by mass or less. When the amount is within the numerical range indicated above, the effects of the present invention tend to be well achieved.

The tread rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur, if present, per 100 parts by mass of the rubber component is preferably 0.5 parts by mass or more, more preferably 1 part by mass or more, but is preferably 10 parts by mass or less, more preferably 5 parts by mass or less, still more preferably 3 parts by mass or less. When the amount is within the numerical range indicated above, the effects of the present invention tend to be well achieved.

The tread rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. To more suitably achieve the effects of the present invention, sulfenamide and/or guanidine vulcanization accelerators are preferred among these.

The amount of the vulcanization accelerator, if present, per 100 parts by mass of the rubber component is preferably 1 part by mass or more, more preferably 3 parts by mass or more, but is preferably 10 parts by mass or less, more preferably 7 parts by mass or less. When the amount is within the numerical range indicated above, the effects of the present invention tend to be well achieved.

In addition to the above-mentioned components, the rubber composition may contain additives commonly used in the tire industry. Examples include organic peroxides; fillers such as calcium carbonate, talc, alumina, clay, aluminum hydroxide, and mica; and processing aids such as plasticizers and lubricants.

The tread rubber composition may be prepared, for example, by kneading the components in a rubber kneading machine such as an open roll mill or Banbury mixer, and vulcanizing the kneaded mixture.

With regard to the kneading conditions used when additives other than vulcanizing agents and vulcanization accelerators are added, the kneading temperature is usually 50 to 200°C, preferably 80 to 190°C, and the kneading time is usually 30 seconds to 30 minutes, preferably 1 minute to 30 minutes.

When a vulcanizing agent and/or vulcanization accelerator are added, the kneading temperature is usually 100°C or lower, preferably from room temperature to 80°C. Moreover, the composition containing a vulcanizing agent and/or vulcanization accelerator is usually subjected to vulcanization treatment such as press vulcanization. The vulcanization temperature is usually 120 to 200°C, preferably 140 to 180°C.

The pneumatic tire of the present invention can be produced using the tread rubber composition by usual methods. Specifically, the unvulcanized rubber composition containing the components may be extruded and processed into the shape of a tread and then assembled with other tire components on a tire building machine in a usual manner to build an unvulcanized tire, which may then be heated and pressurized in a vulcanizer to obtain a tire.

The pneumatic tire of the present invention is suitable for use as a tire for passenger vehicles, large passenger vehicles, large SUVs, heavy duty vehicles such as trucks and buses, or light trucks.

EXAMPLES

The present invention will be specifically described with reference to, but not limited to, examples.

The following describes the chemicals used in the examples and comparative examples.

NR: TSR20
SBR 1: modified SBR (SBR prepared in Production Example 1 described below, styrene content: 25% by mass, vinyl content: 50% by mass)
SBR 2: modified SBR (SBR prepared in Production Example 2 described below, styrene content: 10% by mass, vinyl content: 40% by mass)
SBR 3: modified SBR (SBR prepared in Production Example 3 described below, styrene content: 40% by mass, vinyl content: 45% by mass)
BR: modified BR (BR prepared in Production Example 4 described below, cis content: 40% by mass)
Carbon black: $N_2SA$ 114 $m^2/g$, DBP absorption 114 ml/100 g
Silica 1: $N_2SA$ 175 $m^2/g$
Silica 2: $N_2SA$ 115 $m^2/g$
Silane coupling agent: 3-octanoylthio-1-propyltriethoxysilane
Oil: naphthenic process oil
Resin: α-methylstyrene-based resin (copolymer of α-methylstyrene and styrene), softening point: 85°C, Tg: 43°C
Wax: Ozoace 0355 available from Nippon Seiro Co., Ltd.
Compound 1: EF44 (fatty acid zinc salt) available from Struktol
Compound 2: lauric acid amide ethylaminoethanol, a compound represented by the following formula (a compound of formula (1)):

$$RCONHCH_2CH_2NHCH_2CH_2OH \quad R=C_{11}H_{23}$$

Compound 3: stearic acid amide ethylaminoethanol, a compound represented by the following formula (a compound of formula (1)):

$$RCONHCH_2CH_2NHCH_2CH_2OH \quad R=C_{17}H_{35}$$

Compound 4: stearic acid amide (N-methyl)-ethylaminoethanol, a compound represented by the following formula (a compound of formula (1)):

$$RCONHCH_2CH_2N(CH_3)CH_2CH_2OH \quad R=C_{17}H_{35}$$

Compound 5: stearic acid amide (N-ethanol)-ethylaminoethanol, a compound represented by the following formula (a compound of formula (1)):

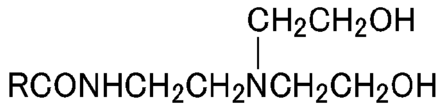

R=$C_{17}H_{35}$

Stearic acid: stearic acid "TSUBAKI" available from NOF Corporation
Antioxidant 1: N-phenyl-N'-(1,3-dimethylbutyl)-p-phenylenediamine
Antioxidant 2: poly(2,2,4-trimethyl-1,2-dihydroquinoline)
Zinc oxide: zinc oxide #1 available from Mitsui Mining & Smelting Co., Ltd.
Sulfur: HK-200-5 (5% oil-containing sulfur) available from Hosoi Chemical Industry Co., Ltd.
Vulcanization accelerator 1: N-tert-butyl-2-benzothiazolylsulfenamide
Vulcanization accelerator 2: N,N'-diphenylguanidine

(Production Example 1)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under adiabatic conditions, and the maximum temperature reached 85°C. Once the polymerization conversion ratio reached 99%, butadiene was added thereto, followed by polymerization for five minutes. Subsequently, 3-dimethylaminopropyltrimethoxysilane was added as a modifier to cause a reaction for 15 minutes. After completion of the polymerization, 2,6-di-tert-butyl-p-cresol was added. Then, the solvent was removed by steam stripping. The resulting product was dried on hot rolls adjusted at 110°C to obtain a modified styrene-butadiene rubber (SBR 1).

(Production Example 2)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under adiabatic conditions, and the maximum temperature reached 85°C. Once the polymerization conversion ratio reached 99%, butadiene was added thereto, followed by polymerization for five minutes. Subsequently, 3-diethylaminopropyl-trimethoxysilane was added as a modifier to cause a reaction for 15 minutes. After completion of the polymerization, 2,6-di-tert-butyl-p-cresol was added. Then, the solvent was removed by steam stripping. The resulting product was dried on hot rolls adjusted at 110°C to obtain a modified styrene-butadiene rubber (SBR 2).

(Production Example 3)

A nitrogen-purged autoclave reactor was charged with hexane, 1,3-butadiene, styrene, tetrahydrofuran, and ethylene glycol diethyl ether. Next, bis(diethylamino)methylvinylsilane and n-butyllithium were introduced in solution in cyclohexane and n-hexane, respectively, to initiate polymerization.

The copolymerization of 1,3-butadiene and styrene was carried out for three hours at a stirring rate of 130 rpm and a temperature inside the reactor of 65°C while continuously feeding the monomers into the reactor. Next, the resulting polymer solution was stirred at a stirring rate of 130 rpm, and N-(3-dimethylaminopropyl)acrylamide was added, followed by a reaction for 15 minutes. After completion of the polymerization, 2,6-di-tert-butyl-p-cresol was added. Then, the solvent was removed by steam stripping. The resulting product was dried on hot rolls adjusted at 110°C to obtain a modified styrene-butadiene rubber (SBR 3).

(Production Example 4)

To a graduated flask in a nitrogen atmosphere were added 3-dimethylaminopropyltrimethoxysilane and then anhydrous hexane to prepare a terminal modifier.

A sufficiently nitrogen-purged pressure-proof vessel was charged with n-hexane, butadiene, and TMEDA, followed by heating to 60°C. Thereafter, butyllithium was added, and the mixture was heated to 50°C and stirred for three hours. Then, the terminal modifier was added, and the mixture was stirred for 30 minutes. To the reaction solution were added methanol and 2,6-tert-butyl-p-cresol, and the resulting reaction solution was put into a stainless steel vessel containing methanol, and then aggregates were collected. The aggregates were dried under reduced pressure for 24 hours to obtain a modified BR.

(Examples and Comparative Examples)

The materials other than the sulfur and vulcanization accelerators in the formulation amounts indicated in Table 1 were kneaded at 150°C for five minutes using a Banbury mixer (Kobe Steel, Ltd.) to give a kneaded mixture. Then, the sulfur and vulcanization accelerators were added to the kneaded mixture, and they were kneaded at 80°C for five minutes using an open roll mill to give an unvulcanized rubber composition. The unvulcanized rubber composition was formed into a tread shape and assembled with other tire components to build an unvulcanized tire. The unvulcanized tire was press-vulcanized at 170°C for 10 minutes to prepare a test tire (size: 195/65R15). The test tires prepared as above were evaluated as shown in Table 1. Table 1 shows the results.

(Tan δ versus temperature curve)

A tan δ versus temperature curve was measured on the (vulcanized) tread rubber cut out of each test tire using a viscoelastic spectrometer (Iwamoto Seisakusho Co., Ltd.) at a frequency of 10 Hz, an initial strain of 10%, an amplitude of ±0.25%, and a temperature rising rate of 2°C/min over a temperature range from -120°C to 70°C. The tan δ versus temperature curve was used to calculate the values indicated in Table 1.

In Table 1, the terms "tan δ at +20°C" and "tan δ at -20°C" mean the tan δ at a temperature higher by 20°C than the peak position temperature and the tan δ at a temperature lower by 20°C than the peak position temperature, respectively.

(Wet grip performance)

The test tire of each example was mounted on each wheel of a front-engine, front-wheel-drive car of 2,000 cc displacement made in Japan. The braking distance of the car with an initial speed of 100 km/h under wet asphalt conditions (including a road surface temperature of 20°C or 40°C) was determined and expressed as an index (wet grip performance index), with Comparative Example 1 taken as 100. A higher index indicates a shorter braking distance and therefore better wet grip performance.

The road surface temperatures of 20°C and 40°C correspond to road surface conditions in Germany and the Republic of South Africa, respectively.

(Low-temperature brittleness)

The brittle temperature of the (vulcanized) tread rubber cut out of each test tire was measured in accordance with the low-temperature brittle fracture test method set forth in JIS K 3601. The results were evaluated based on the following criteria.
Good: The brittle temperature is not higher than -25°C.
Poor: The brittle temperature is higher than -25°C.

A rubber having "Poor" low-temperature brittleness may be broken in low temperature conditions such as in winter and thus cannot be used for tires.

[Table 1]

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|---|---|---|---|---|---|---|---|---|---|
| Amount (parts by mass) | NR | 10 | | | 10 | | | | 10 | 20 | 10 | 10 | 10 | 10 | 10 | 10 | 20 | 10 | 10 | | | 25 | 10 |
| | SBR 1 | 50 | 70 | 50 | 50 | 50 | 70 | 30 | | 40 | 40 | | 40 | 40 | 40 | 40 | 40 | 50 | 60 | 40 | 40 | 40 | 40 |
| | SBR 2 | 10 | | | 10 | | | | 40 | | | 40 | 15 | 15 | 15 | 15 | 15 | | | 20 | 15 | 15 | 30 |
| | SBR 3 | | | 30 | | 30 | | 70 | 25 | 25 | 35 | 35 | 20 | 20 | 20 | 20 | 20 | 20 | 30 | 30 | 20 | 20 | 20 |
| | BR | 30 | 30 | 20 | 30 | 20 | 30 | | 25 | 15 | 15 | 15 | 15 | 15 | 15 | 15 | 5 | 20 | | 10 | 15 | | |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Silica 1 | 35 | 35 | 35 | 35 | 35 | 35 | 35 | 35 | 35 | 35 | 35 | 35 | 35 | 35 | 35 | 35 | 35 | 35 | 35 | 35 | 35 | 35 |
| | Silica 2 | 20 | 20 | 20 | 20 | 20 | 20 | 20 | 20 | 20 | 20 | 20 | 20 | 20 | 20 | 20 | 20 | 20 | 20 | 20 | 20 | 20 | 20 |
| | Silane coupling agent | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Oil | 20 | 20 | 20 | 20 | 20 | 20 | 20 | 3 | 3 | 3 | 3 | 3 | 3 | 3 | 3 | 3 | 3 | 3 | 3 | 3 | 3 | 3 |
| | Resin | | | | 3 | 3 | 3 | 3 | 3 | 3 | 3 | 3 | 3 | 3 | 3 | 3 | 3 | 3 | 3 | 3 | 3 | 3 | 3 |
| | Wax | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Compound 1 | | | | | | | | | | | 3 | | | | | | | | | | | |
| | Compound 2 | | | | | | | | | | | | 3 | | | | 3 | 3 | 3 | 3 | 3 | 3 | 3 |
| | Compound 3 | | | | | | | | | | | | | 3 | | | | | | | | | |
| | Compound 4 | | | | | | | | | | | | | | 3 | | | | | | | | |
| | Compound 5 | | | | | | | | | | | | | | | 3 | | | | | | | |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 1 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Zinc oxide | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | tan δ at peak position | 0.58 | 0.82 | 0.60 | 0.60 | 0.62 | 0.85 | 0.85 | 0.90 | 0.85 | 0.95 | 0.95 | 0.90 | 0.87 | 0.94 | 0.95 | 0.80 | 1.06 | 1.20 | 0.91 | 1.01 | 1.20 | 1.10 |
| | Peak position temperature | −28 | −25 | −15 | −25 | −12 | −22 | 2 | −19 | −16 | −11 | −15 | −11 | −11 | −13 | −12 | −11 | −18 | −4 | −10 | −12 | −8 | −19 |
| | tan δ at intersection | 0.42 | 0.71 | 0.80 | 0.56 | 0.65 | 0.84 | 0.81 | 0.80 | 0.98 | 0.85 | 0.87 | 0.86 | 0.85 | 0.90 | 0.91 | 0.76 | 1.02 | 1.15 | 0.96 | 0.96 | 1.22 | 1.11 |
| | Difference between tan δ at intersection and tan δ at peak position | 0.16 | 0.11 | −0.20 | 0.04 | −0.03 | 0.01 | 0.04 | 0.10 | −0.13 | 0.10 | 0.08 | 0.04 | 0.02 | 0.04 | 0.04 | 0.04 | 0.04 | 0.04 | −0.05 | 0.05 | −0.02 | −0.01 |
| | tan δ at +20°C | 0.40 | 0.27 | 0.40 | 0.37 | 0.36 | 0.30 | 0.42 | 0.45 | 0.29 | 0.35 | 0.31 | 0.30 | 0.30 | 0.30 | 0.30 | 0.30 | 0.26 | 0.26 | 0.05 | 0.31 | 0.24 | 0.34 |
| | tan δ at −20°C | 0.25 | 0.30 | 0.22 | 0.28 | 0.25 | 0.25 | 0.20 | 0.30 | 0.34 | 0.30 | 0.32 | 0.28 | 0.27 | 0.23 | 0.26 | 0.24 | 0.25 | 0.25 | 0.28 | 0.35 | 0.30 | 0.22 |
| | tan δ at +20°C/tan δ at peak position | 0.69 | 0.33 | 0.67 | 0.62 | 0.58 | 0.35 | 0.49 | 0.50 | 0.34 | 0.37 | 0.33 | 0.33 | 0.34 | 0.32 | 0.32 | 0.38 | 0.25 | 0.25 | 0.30 | 0.31 | 0.20 | 0.31 |
| | tan δ at −20°C/tan δ at peak position | 0.43 | 0.37 | 0.37 | 0.47 | 0.40 | 0.29 | 0.24 | 0.33 | 0.40 | 0.32 | 0.34 | 0.31 | 0.31 | 0.24 | 0.27 | 0.30 | 0.24 | 0.24 | 0.31 | 0.35 | 0.25 | 0.20 |
| | Difference between tan δ at +20°C and tan δ at −20°C | 0.26 | −0.04 | 0.30 | 0.15 | 0.18 | 0.06 | 0.26 | 0.17 | −0.06 | 0.05 | −0.01 | 0.02 | 0.03 | 0.07 | 0.04 | 0.08 | 0.01 | 0.01 | 0.33 | −0.04 | −0.05 | 0.11 |
| | Half-width | 26 | 22 | 25 | 25 | 23 | 21 | 20 | 17 | 15 | 15 | 15 | 14 | 15 | 16 | 14 | 16 | 15 | 16 | 13 | 17 | 14 | 15 |
| Results | Wet grip performance at road surface temperature of 20°C | 100 | 104 | 101 | 95 | 102 | 105 | 130 | 107 | 109 | 110 | 108 | 120 | 120 | 118 | 118 | 115 | 115 | 115 | 115 | 120 | 117 | 115 |
| | Wet grip performance at road surface temperature of 40°C | 100 | 102 | 100 | 97 | 101 | 103 | 130 | 106 | 109 | 110 | 107 | 120 | 120 | 118 | 118 | 115 | 115 | 115 | 115 | 119 | 117 | 115 |
| | Low-temperature brittleness | Good | Good | Good | Good | Good | Good | Poor | Good | Good | Good | Good | Good | Good | Good | Good | Good | Good | Good | Good | Good | Good | Good |

Comp. Ex.: Comparative Example

Ex.: Example

As demonstrated in Table 1, since the pneumatic tires of the examples included a tread showing a loss tangent (tan $\delta$) versus temperature curve whose peak position was at -20.0°C to 0.0°C and whose tan $\delta$ at the peak position was 0.80 or higher, and in which the curve was obtained by plotting tan $\delta$ as a function of measurement temperature, and the curve had a tan $\delta$ at an intersection of a tangent line to the curve at a temperature lower by 20°C than the peak position temperature and a tangent line to the curve at a temperature higher by 20°C than the peak position temperature that satisfied relationship (1), they was able to exhibit sufficient wet grip performance on roads in different areas.

## Claims

1. A pneumatic tire, comprising a tread,
the tread showing a loss tangent (tan $\delta$) versus temperature curve whose peak position is at -20.0°C to 0.0°C and whose tan $\delta$ at the peak position is 0.80 or higher, the curve being obtained by plotting tan $\delta$ as a function of measurement temperature,
the curve having a tan $\delta$ at an intersection of a tangent line to the curve at a temperature lower by 20°C than the peak position temperature and a tangent line to the curve at a temperature higher by 20°C than the peak position temperature that satisfies the following relationship (1):

$$(\tan\delta \text{ at peak position} - 0.05) \leq (\tan\delta \text{ at intersection}) \leq (\tan\delta \text{ at peak position} + 0.05) \quad (1).$$

2. The pneumatic tire according to claim 1,
wherein the curve has a tan $\delta$ at a temperature lower by 20°C than the peak position temperature and a tan $\delta$ at a temperature higher by 20°C than the peak position temperature that satisfy the following relationships (2) and (3), respectively:

$$(\tan\delta \text{ at temperature lower by } 20^\circ\text{C than peak position temperature}) \geq (\tan\delta \text{ at peak position} \times 0.20) \quad (2);\ a$$

and

$$(\tan\delta \text{ at temperature higher by } 20^\circ\text{C than peak position temperature}) \geq (\tan\delta \text{ at peak position} \times 0.20) \quad (3).$$

3. The pneumatic tire according to claim 1 or 2,
wherein the curve has a tan $\delta$ at a temperature lower by 20°C than the peak position temperature and a tan $\delta$ at a temperature higher by 20°C than the peak position temperature that satisfy the following relationship (4):

$$|(\tan\delta \text{ at temperature lower by } 20^\circ\text{C than peak position temperature}) - (\tan\delta \text{ at temperature higher by } 20^\circ\text{C than peak position temperature})| \leq 0.30 \quad (4).$$

4. The pneumatic tire according to any one of claims 1 to 3,
wherein the peak has a half-width of 30 or less as defined by the following equation (5):

half-width = (temperature on high temperature side at which tan δ is one half of tan δ at peak position) - (temperature on low temperature side at which tan δ is one half of tan δ at peak position).

FIG. 1

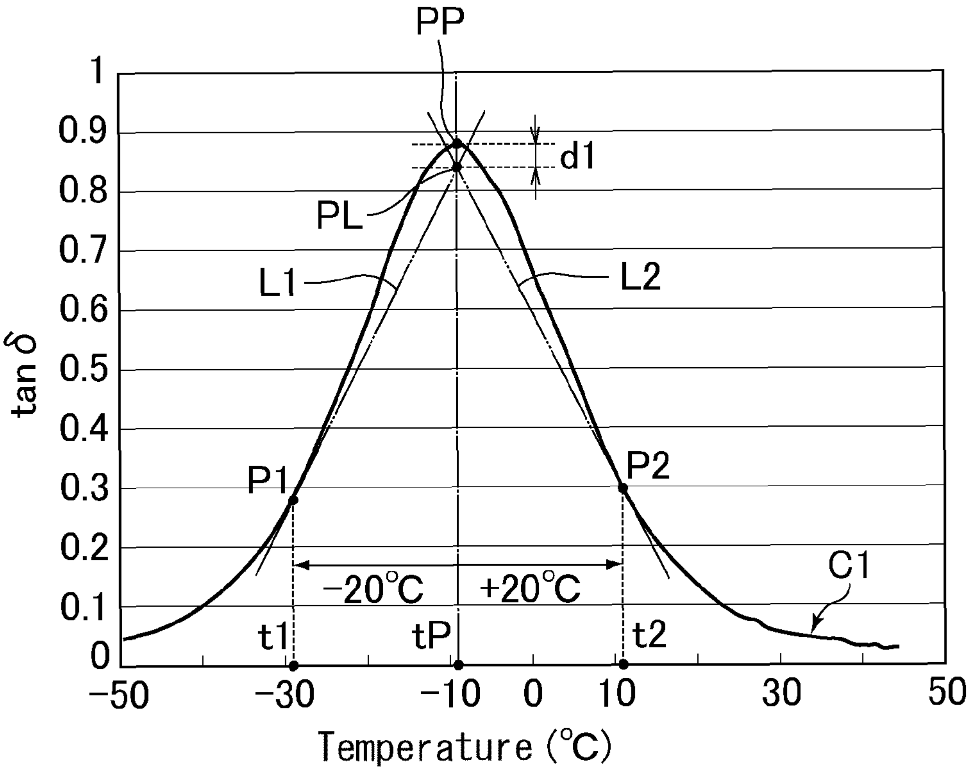
PP
PL
d1
L1
L2
P1
P2
C1
t1
tP
t2
-20°C
+20°C
tan δ
1
0.9
0.8
0.7
0.6
0.5
0.4
0.3
0.2
0.1
0
-50
-30
-10
0
10
30
50
Temperature (°C)

## INTERNATIONAL SEARCH REPORT

International application No.
PCT/JP2018/027793

A. CLASSIFICATION OF SUBJECT MATTER
Int.Cl. B60C11/00(2006.01)i

According to International Patent Classification (IPC) or to both national classification and IPC

B. FIELDS SEARCHED

Minimum documentation searched (classification system followed by classification symbols)
Int.Cl. B60C1/00-19/12, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-188675 A (THE YOKOHAMA RUBBER CO., LTD.) 23 July 1996, entire text & US 5834552 A, whole document & EP 717075 A1 | 1-4 |
| A | JP 11-315168 A (THE YOKOHAMA RUBBER CO., LTD.) 16 November 1999, entire text & US 5834552 A, whole document & EP 717075 A1 & JP 8-217917 A | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 October 2018 (17.10.2018) | 30 October 2018 (30.10.2018) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2018/027793

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-231766 A (THE YOKOHAMA RUBBER CO., LTD.) 10 September 1996, entire text & US 5834552 A, whole document & EP 717075 A1 | 1-4 |
| A | JP 2001-89604 A (TOYO TIRE AND RUBBER CO., LTD.) 03 April 2001, entire text (Family: none) | 1-4 |
| A | JP 8-269243 A (TOYO TIRE AND RUBBER CO., LTD.) 15 October 1996, entire text (Family: none) | 1-4 |
| A | JP 2006-152079 A (SUMITOMO RUBBER INDUSTRIES, LTD.) 15 June 2006, entire text (Family: none) | 1-4 |
| A | WO 2013/099325 A1 (SUMITOMO RUBBER INDUSTRIES, LTD.) 04 July 2013, entire text & US 2014/0329931 A1, whole document & EP 2787032 A1 & CN 103987775 A | 1-4 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015232114 A